# EUROPÄISCHE PATENTSCHRIFT

(11) **EP 4 004 318 B1**
(45) Veröffentlichungstag und Bekanntmachung des Hinweises auf die Patenterteilung: **31.01.2024**
(21) Anmeldenummer: 20796511.2
(22) Anmeldetag: 15.10.2020
(51) Int. Cl.: E05F 15/40, E05F 15/42, E05F 15/43

(54) **TÜRSICHERHEITSSYSTEM, VERFAHREN ZUM BETRIEB EINES TÜRSICHERHEITSSYSTEMS UND TRANSPORTMITTEL**
DOOR SAFETY SYSTEM, METHOD FOR OPERATING A DOOR SAFETY SYSTEM, AND TRANSPORT MEANS
SYSTÈME DE SÉCURITÉ DE PORTE, PROCÉDÉ DE FONCTIONNEMENT D'UN SYSTÈME DE SÉCURITÉ DE PORTE ET MOYEN DE TRANSPORT

(30) Priorität: 17.10.2019 DE 102019128079
(43) Veröffentlichungstag der Anmeldung: 01.06.2022
(73) Patentinhaber: ROSENBERGER HOCHFREQUENZTECHNIK GMBH & CO. KG, 83413 Fridolfing (DE)
(72) Erfinder: SCHNEIDER, Levente, 83413 Fridolfing (DE); KOZEL, Herbert, 83395 Freilassing (DE)
(74) Vertreter: Lorenz, Matthias
(86) Internationale Anmeldenummer: PCT/EP2020/079041
(87) Internationale Veröffentlichungsnummer: WO 2021/074293

(56) Entgegenhaltungen:
- EP-A2- 0 908 594
- DE-U1- 20 001 473
- US-A- 5 836 639

## Beschreibung

Die Erfindung betrifft eine automatische Tür für ein Transportmittel gemäß dem Oberbegriff des Anspruchs 1. Die Erfindung betrifft außerdem ein Transportmittel, insbesondere einen Omnibus oder ein Schienenfahrzeug.

Die Erfindung betrifft auch ein Verfahren zum Betrieb einer automatischen Tür für ein Transportmittel, gemäß dem Oberbegriff des Anspruchs 13.

Die Erfindung betrifft außerdem auch ein Computerprogrammprodukt.

Insbesondere aus dem öffentlichen Verkehr sind automatische Türen bekannt, beispielsweise einflüglige oder zweiflüglige Schwenkschiebetüren.

Um das Betreten eines mit automatischen Türen ausgestatteten Transportmittels sicherer zu gestalten und Verletzungen von Personen oder Beschädigungen von Gegenständen, die sich im Schließbereich der Türflügel befinden zu vermeiden, weisen die Türen eine Sicherheitskomponente auf. Dabei sind verschiedene Sicherheitssysteme bekannt, die in der Regel an den beweglichen Türelementen, beispielsweise den Türflügeln, angeordnet sind.

Insbesondere können Lichtschranken und so genannte Sicherheitskontaktleisten gewährleisten, dass keine Objekte zwischen den sich schließenden Türelementen oder zwischen einem Türelement und dem Türrahmen eingeklemmt werden. Sofern durch die Lichtschranke oder durch die Sicherheitskontaktleiste ein kollisionsgefährdetes Objekt erkannt wird kann der Schließvorgang der Tür abgebrochen und die Tür gegebenenfalls auch wieder teilweise oder vollständig geöffnet werden. Außerdem sind Lichtleisten und akustische Signalgeber bekannt, um Personen auf ein anstehendes Schließen der Tür aufmerksam zu machen.

Einen guten Überblick über den bekannten Stand der Technik kann beispielsweise die WO 2018/219694 A1 bieten, die eine Sicherheitsprofilleiste für wenigstens eine Tür von Transportmitteln betrifft und in der auch weiterer technischer Hintergrund erläutert wird.

Zur elektrischen Versorgung und zum Datenaustausch mit den an den beweglichen Türelementen angeordneten Sicherheitskomponenten werden in der Praxis im Bereich der Scharniere bzw. Schwenkarme Kabelbäume verlegt. Da die Kabelbäume durch das häufige Öffnen und Schließen der Tür ständiger mechanischer Belastung ausgesetzt sind, sind die Einzelleitungen der Kabelbäume und die beteiligten Steckverbinder entsprechend anfällig für Beschädigungen und altern unverhältnismäßig schnell.

Auch lassen sich die Kabelbäume in der Regel nicht ausreichend gut verkleiden und sind damit nur bedingt von äußeren Einflüssen abschirmbar. Die Kabelbäume sind damit unter anderem anfällig für mutwillige oder unabsichtliche Beschädigungen durch Fahrgäste.

Die bekannten Türsicherheitssysteme sind damit insgesamt störanfällig, teuer und wartungsintensiv.

Zum technischen Hintergrund sei außerdem noch auf die folgenden Druckschriften verwiesen.

Die EP 0 908 594 A2 betrifft eine Einrichtung zur Überwachung des Türöffnungsbereiches zwischen einem Türrahmen und einem in Bezug auf den Türrahmen beweglichen Türblatt, wobei die Einrichtung einen am Türblatt befestigten und mit ihm beweglichen Svstemteil und einen in Bezug auf ihn feststehenden Systemteil aufweist, wobei der bewegliche Systemteil Steuersignale an den feststehenden Systemteil sendet.

Die US 5,836,639 A betrifft ein Kraftfahrzeug mit einer Tür, die an der Karosserie zwischen einer geschlossenen Position und einer offenen Position bewegbar ist, wobei eine elektronische Steuerung in der Tür einen Sender zum Übertragen eines Signals aufweist, das die Position der Tür und eines Riegels anzeigt. Eine weitere elektronische Steuerung in der Karosserie enthält einen Empfänger zum Empfangen des Signals von dem Sender in der Tür, um den Antrieb entsprechend dem empfangenen Signal zu betreiben.

Die DE 200 01 473 U1 betrifft ein Sicherheitssystem zum Schutz von Personen oder Gegenständen an bewegbaren und/oder angetriebenen Toren, mit zumindest einem dem Tor zugeordneten Signalgeber, insbesondere einer Kontaktleiste.

In Anbetracht des bekannten Stands der Technik besteht die Aufgabe der vorliegenden Erfindung darin, eine automatische Tür für ein Transportmittel mit einem verbesserten Türsicherheitssystem bereitzustellen, das insbesondere robust und wartungsarm eingesetzt werden kann.

Außerdem ist es Aufgabe der Erfindung, ein Transportmittel mit wenigstens einer verbesserten Tür bereitzustellen, die ein Türsicherheitssystem aufweist, das insbesondere robust und wartungsarm eingesetzt werden kann.

Es ist auch eine Aufgabe der Erfindung, ein vorteilhaftes Verfahren zum Betrieb einer automatischen Tür für ein Transportmittel bereitzustellen, das insbesondere robust und wartungsarm eingesetzt werden kann.

Ferner ist es Aufgabe der Erfindung, ein Computerprogrammprodukt für ein vorteilhaftes Verfahren zum Betrieb eines Türsicherheitssystems bereitzustellen.

Die Aufgabe wird für die automatische Tür durch die Merkmale des Anspruchs 1 und bezüglich des Transportmittels durch Anspruch 12 gelöst. Die Aufgabe wird außerdem für das Verfahren durch Anspruch 13 gelöst. Hinsichtlich des Computerprogrammprodukts wird die Aufgabe durch die Merkmale des Anspruchs 14 gelöst.

Die abhängigen Ansprüche und die nachfolgend beschriebenen Merkmale betreffen vorteilhafte Ausführungsformen und Varianten der Erfindung.

Die Erfindung betrifft eine automatische Tür für ein Transportmittel. Die automatische Tür weist einen Türrahmen, wenigstens ein bewegliches Türelement und wenigstens ein Türsicherheitssystem auf. Das Türsicherheitssystem weist eine an dem beweglichen Türelement der Tür angeordnete Sicherheitskomponente auf. Das Türsicherheitssystem weist außerdem eine an dem unbeweglichen Türrahmen der Tür angeordnete Versorgungskomponente zur elektrischen Versorgung der Sicherheitskomponente auf.

Die Begriffe "beweglich" und "unbeweglich" beziehen sich dabei auf die Bewegung des Türelements relativ zu dem Türrahmen bzw. zu der feststehenden Umrahmung des Türelements. Somit ist das Türelement relativ zu dem Türrahmen beweglich, wobei der Türrahmen unbeweglich an einer umgebenden Struktur angeordnet ist, beispielsweise an einer Fahrzeugkarosserie, an einem Fahrstuhlschacht oder an einer Wand.

Erfindungsgemäß ist vorgesehen, dass die Sicherheitskomponente einen elektrischen Energiespeicher aufweist der ausgebildet ist, um die Sicherheitskomponente im geöffneten Zustand der Tür autark mit elektrischer Energie zu versorgen. Die Sicherheitskomponente und die Versorgungskomponente sind ausgebildet, um den elektrischen Energiespeicher der Sicherheitskomponente im geschlossenen Zustand der Tür elektrisch aufzuladen.

Erfindungsgemäß versorgt die Versorgungskomponente die Sicherheitskomponente ausschließlich im geschlossenen Zustand der Tür.

Die Versorgungskomponente kann die Sicherheitskomponente dahingehend versorgen, dass der elektrische Energiespeicher der Sicherheitskomponente mit elektrischer Energie zum Aufladen versorgt wird. Optional kann die Versorgungskomponente die Sicherheitskomponente im geschlossenen Zustand der Tür auch direkt mit elektrischer Energie versorgen, während gegebenenfalls gleichzeitig auch der Energiespeicher geladen wird.

Unter einem "geschlossenen Zustand" der Tür ist insbesondere ein vollständig geschlossener Zustand der Tür gemeint. Bei einem "geöffneten Zustand" kann es sich demnach vorzugsweise um einen Zustand der Tür handeln, in dem diese nicht mehr vollständig geschlossen ist, also auch um einen Zwischenzustand zwischen einer vollständig geschlossenen Tür und einer vollständig geöffneten Tür. Der Energiespeicher kann die Sicherheitskomponente somit bereits während des Öffnungsvorgangs der Tür autark versorgen.

Dadurch, dass die Versorgungskomponente die Sicherheitskomponente erfindungsgemäß lediglich im geschlossenen Zustand der Tür elektrisch versorgt und die Sicherheitskomponente ansonsten autark durch deren Energiespeicher betrieben werden kann, kann ein Kabelbaum zwischen dem beweglichen Türelement und dem Türrahmen zur Energieversorgung der Elektronik des Türelements entfallen.

Durch das Entfallen der Versorgungsleitungen ist das gesamte Türsicherheitssystem schließlich weniger fehleranfällig und kann wartungsarm betrieben werden. Die Lebensdauer und Sicherheit eines erfindungsgemäßen Türsicherheitssystems ist damit erhöht.

Es kann vorgesehen sein, dass die Versorgungskomponente den Energiespeicher der Sicherheitskomponente nach jedem Schließen der Tür auflädt, bis die Tür wieder geöffnet wird. Es kann aber auch vorgesehen sein, dass die Versorgungskomponente den Energiespeicher immer nur nach einer definierten Anzahl Schließvorgänge lädt, beispielsweise nur nach jedem zweiten Schließen der Tür, nach jedem dritten Schließen der Tür, nach jedem vierten Schließen der Tür etc. Hierdurch können die Ladezyklen des Energiespeichers verringert und damit die Lebensdauer des Energiespeichers gegebenenfalls erhöht werden.

Es kann außerdem vorgesehen sein, dass die Versorgungskomponente den Energiespeicher der Sicherheitskomponente nur nach manueller Freigabe durch einen Benutzer, beispielsweise einen Fahrer eines Fahrzeugs, lädt. Somit kann ein Aufladevorgang beispielsweise auch nur bei längeren Betriebspausen vorgesehen sein. Auch ein fahrplanabhängiger Ladeplan kann vorgesehen sein, wonach ein Ladevorgang beispielsweise nur zwischen bestimmten Haltestellen vorgesehen ist.

Ferner kann vorgesehen sein, dass die Versorgungskomponente den Energiespeicher der Sicherheitskomponente nur bis zu einem definierten Ladezustand auflädt, beispielsweise bis zu einem Ladezustand von 30% bis 80% der Gesamtkapazität des Energiespeichers, vorzugsweise bis zu einem Ladezustand von 50% bis 80% der Gesamtkapazität des Energiespeichers, besonders bevorzugt bis zu einem Ladezustand von 70% bis 80% der Gesamtkapazität des Energiespeichers. Der Ladevorgang kann somit unterbrochen werden, selbst wenn die Schließdauer der Tür ein weiteres Aufladen zulassen würde. Auch hierdurch kann die Lebensdauer des Energiespeichers gegebenenfalls weiter erhöht werden.

In einer vorteilhaften Weiterbildung der Erfindung kann vorgesehen sein, dass die Sicherheitskomponente zum Schutz von Lebewesen (insbesondere Tieren und Menschen) oder Gegenständen ausgebildet ist.

Grundsätzlich kann es sich bei der Sicherheitskomponente aber auch um ein elektronisches Türschloss handeln (beispielsweise ein elektronisches Türschloss mit biometrischer Zugangskontrolle, RFID-Zugangskontrolle oder einem Codeschloss). Vorzugsweise handelt es sich bei der Sicherheitskomponente allerdings nicht um ein Türschloss.

Gemäß einer Weiterbildung der Erfindung kann vorgesehen sein, dass die Sicherheitskomponente eine Lichtschranke zur Erfassung von Lebewesen oder Gegenständen im Schließbereich der Tür aufweist. Alternativ oder zusätzlich kann vorgesehen sein, dass die Sicherheitskomponente eine Sicherheitskontaktleiste zur Erfassung einer Kollision des Türelements mit einem Lebewesen oder einem Gegenstand aufweist. Alternativ oder zusätzlich kann vorgesehen sein, dass die Sicherheitskomponente einen optischen, akustischen oder haptischen Signalgeber zur Warnung von Lebewesen aufweist, insbesondere um auf eine sich zeitnah schließende Tür oder auf eine sich bereits schließende Tür hinzuweisen.

Die Lichtschranke kann insbesondere als Lichtgitter ausgebildet sein. Vorzugsweise ist ein Lichtgitter für einen berührungslosen Einklemmschutz vorgesehen, beispielsweise das LEXI Lichtgitter der Gummi-Welz GmbH & CO. KG. Bei Erfassung eines Objekts zwischen Türelement und Türrahmen oder zwischen zwei Türelementen kann ein Unterbrechungssignal zum Stoppen des Schließvorgangs der Tür erzeugt werden. Derartige Systeme sind insbesondere für Omnibusse und Schienenfahrzeuge ausreichend bekannt, weshalb auf das Funktionsprinzip vorliegend nicht weiter eingegangen wird.

Die Sicherheitskontaktleiste kann insbesondere als Gummiprofilleiste zwischen Türelement und Türrahmen oder zwischen zwei Türelementen ausgebildet sein, in die einer oder mehrere elektrische Kontakte integriert sind, die bei einer kollisionsbedingten Kompression des Gummiprofils ein elektrisches Unterbrechungssignal zum Stoppen des Schließvorgangs der Tür erzeugen können. Derartige Sicherheitskontaktleisten sind auch unter dem Begriff Sicherheitsprofilleiste für Omnibusse und Schienenfahrzeuge bekannt (vgl. beispielsweise die WO 2018/219694 A1).

Auch Signalgeber zur Warnung von Personen vor sich schließenden Türen sind insbesondere aus dem öffentlichen Nahverkehr bekannt. Beispielsweise eignet sich die Erfindung vorteilhaft zur Verwendung mit einem Fedra-LED-Leuchtstreifen der Gummi-Welz GmbH & CO. KG. Auch die Verwendung von Summern oder periodischen akustischen Signalgebern kann vorteilhaft zur Verwendung mit der Erfindung vorgesehen sein.

Vorzugsweise weist die Sicherheitskomponente mehrere Sicherheitssysteme in Kombination auf, beispielsweise ein Lichtgitter, eine Sicherheitskontaktleiste und einen Leuchtstreifen.

Gemäß einer Weiterbildung der Erfindung kann vorgesehen sein, dass die Sicherheitskomponente ausgebildet ist, um ein elektrisches Unterbrechungssignal an eine zum Bewegen des Türelements verwendete Aktuatoreinrichtung zu übertragen oder eine Übertragung eines Unterbrechungssignals auszulösen, um einen automatischen Schließvorgang der Tür durch die Aktuatoreinrichtung zu unterbrechen.

Die Aktuatoreinrichtung kann insbesondere einen oder mehrere Motoren zum Öffnen und Schließen des Türelements (oder mehrerer Türelemente) aufweisen. Die Aktuatoreinrichtung bzw. die Motoren sind vorzugsweise an dem Türrahmen oder im Bereich des Türrahmens befestigt und damit nicht an dem beweglichen Türelement angeordnet.

Insbesondere können die Motoren der Aktuatoreinrichtung als Elektromotoren ausgebildet sein. Auch pneumatische Motoren, hydraulische Motoren oder sonstige Motoren können sich allerdings gut eignen. Sofern nachfolgend von einem Elektromotor gesprochen wird so ist dies nicht einschränkend zu verstehen.

Es kann vorgesehen sein, dass die Aktuatoreinrichtung ausgebildet ist den Schließvorgang - oder gegebenenfalls auch einen Öffnungsvorgang - bei Empfang des Unterbrechungssignals abzubrechen, d. h. die Bewegung des Türelements (oder der Türelemente) zu stoppen oder teilweise oder vollständig umzukehren und die Türelemente beispielsweise wieder zu öffnen.

Bei dem Unterbrechungssignal kann es sich um ein analoges und/oder digitales Datensignal handeln.

In einer Weiterbildung der Erfindung kann vorgesehen sein, dass der elektrische Energiespeicher der Sicherheitskomponente als Akkupack mit wenigstens einer Akkuzelle ausgebildet ist.

Vorzugsweise ist ein Akkupack mit mehreren Akkuzellen vorgesehen, die in einer Reihenschaltung und/oder Parallelschaltung miteinander verbunden sind um einen zur Versorgung der Sicherheitskomponente ausreichend hohen Strom zu liefern, eine ausreichend hohe Spannung bereitzustellen und eine geeignete Versorgungskapazität zur Verfügung zu halten.

Beispielsweise können zwei oder mehr Akkuzellen in einer Reihenschaltung vorgesehen sein, drei oder mehr Akkuzellen in einer Reihenschaltung vorgesehen sein, vier oder mehr Akkuzellen in einer Reihenschaltung vorgesehen sein, fünf oder mehr Akkuzellen in einer Reihenschaltung vorgesehen sein oder noch mehr Akkuzellen in einer Reihenschaltung vorgesehen sein. Beispielsweise können auch zwei oder mehr Akkuzellen in einer Parallelschaltung vorgesehen sein, drei oder mehr Akkuzellen in einer Parallelschaltung vorgesehen sein, vier oder mehr Akkuzellen in einer Parallelschaltung vorgesehen sein, fünf oder mehr Akkuzellen in einer Parallelschaltung vorgesehen sein oder noch mehr Akkuzellen in einer Parallelschaltung vorgesehen sein.

Auf die tatsächliche Anzahl der Akkuzellen und deren Verschaltung kommt es im Rahmen der Erfindung nicht unbedingt an.

Es kann vorgesehen sein, dass wenigstens eines der verwendeten Akkupacks ein Lithium-lonen-Akkupack ist. Insbesondere bei Verwendung von Lithium-lonen-Akkupacks, deren Akkuzellen eine Nennspannung von etwa 3,3 bis 3,8 Volt aufweisen (in der Regel eine Nennspannung von etwa 3,7 Volt), kann vorgesehen sein, vier Akkuzellen in einer Reihenschaltung anzuordnen, wodurch das Akkupack eine Nennspannung von etwa 14,8 Volt aufweist.

Bei dem Akkupack kann es sich aber auch um einen Nickel-Metall-Hybridakkumulator, Nickel-Cadmium-Akkumulator oder Bleiakkumulator handeln. Grundsätzlich ist die Erfindung nicht auf die Verwendung mit einem bestimmten Typ Akkupack begrenzt zu verstehen.

Grundsätzlich kann der elektrische Energiespeicher beliebig ausgebildet sein. Es muss sich nicht unbedingt um ein Akkupack handeln. Beispielsweise kann es sich bei dem elektrischen Energiespeicher auch um einen Speicher für elektrische Energie handeln, der nicht oder nicht ausschließlich elektrochemisch aufgebaut ist, also zum Beispiel um einen Kondensator oder um mehrere Kondensatoren.

In einer Weiterbildung der Erfindung kann vorgesehen sein, dass die Sicherheitskomponente und die Versorgungskomponente ausgebildet sind, um den elektrischen Energiespeicher der Sicherheitskomponente im geschlossenen Zustand der Tür drahtlos bzw. kontaktlos, vorzugsweise induktiv, elektrisch aufzuladen.

Eine drahtlose Energieübertragungsstrecke kann besonders vorteilhaft sein, da die elektrischen Komponenten in diesem Falle vollständig gekapselt und damit gut gegen Umwelteinflüsse geschützt werden können. Außerdem kann eine Energieübertragung selbst dann stattfinden, wenn die zur Energieübertragung verwendeten Bauelemente, insbesondere Spulen, nicht ideal aufeinander ausgerichtet sind. Toleranzen bei der Ausrichtung der geschlossenen Türelemente innerhalb des Türrahmens können damit ausgeglichen werden. Vorzugsweise sind der Abstand und/oder der seitliche Versatz zwischen den Spulen während der Energieübertragung allerdings nicht größer als etwa 4 Millimeter.

Die drahtlose bzw. kontaktlose Energieübertragung erfolgt vorzugsweise durch planare, offene Spulen mit dem sogenannten Resonanzverfahren.

Um elektromagnetische Störaussendungen zu verringern und um eine geeignete elektromagnetische Verträglichkeit (EMV) des Türsicherheitssystems zu gewährleisten kann es vorgesehen sein, einzelne Komponenten des Türsicherheitssystems elektromagnetisch abzuschirmen, beispielsweise unter Verwendung eines metallischen Schirmgehäuses, einer Mu-Metallfolie und/oder einer Absorberfolie.

Optional kann senderseitig eine Fremdobjekterkennung vorgesehen sein um Fremdobjekte in der Nähe der Spulen zu erkennen und die Energieübertragung gegebenenfalls zu reduzieren oder abzubrechen wenn ein Fremdobjekt erkannt wurde.

In einer Weiterbildung der Erfindung kann auch vorgesehen sein, dass die Sicherheitskomponente und die Versorgungskomponente ausgebildet sind, um den elektrischen Energiespeicher der Sicherheitskomponente der Tür elektrisch aufzuladen, indem ein an dem Türelement angeordnetes und mit der Sicherheitskomponente elektrisch verbundenes Kontaktelement im geschlossenen Zustand der Tür ein an dem Türrahmen angeordnetes und mit der Versorgungskomponente elektrisch verbundenes Gegenkontaktelement kontaktiert.

Somit kann grundsätzlich auch eine kontaktbasierte Energieübertragung vorgesehen sein, wobei die drahtlose bzw. kontaktlose Energieübertragung allerdings bevorzugt ist.

Es können beliebig viele Kontaktpaare aus einem Kontaktelement und einem Gegenkontaktelement vorgesehen sein, insbesondere ein Kontaktpaar, zwei Kontaktpaare, drei Kontaktpaare, vier Kontaktpaare, fünf Kontaktpaare, sechs Kontaktpaare, sieben Kontaktpaare, acht Kontaktpaare oder noch mehr Kontaktpaare von Kontaktelementen und Gegenkontaktelementen.

Das Kontaktelement und das Gegenkontaktelement eines Kontaktpaars kontaktieren sich vorzugsweise stirnseitig.

Das Kontaktelement und/oder das Gegenkontaktelement eines Kontaktpaars kann beispielsweise als Flachkontakt ausgebildet sein. Es kann auch vorgesehen sein, dass das Kontaktelement als Stiftkontakt, beispielsweise als Federkontaktstift ("Pogo-Pin") und das Gegenkontaktelement als Flachkontakt ausgebildet ist - oder umgekehrt. Auch ein Steckkontakt bzw. eine Kombination aus Stecker und Buchse kann gegebenenfalls vorgesehen sein. Ferner können auch Magnetkontakte vorgesehen sein, beispielsweise ein magnetischer Schlitten, wonach eines oder mehrere der Kontaktelemente und/oder Gegenkontaktelemente durch magnetische Anziehungskräfte angehoben werden, um den elektrischen Kontakt herzustellen.

Erfindungsgemäß ist eine an dem Türrahmen angeordnete Steuerungskomponente zur Steuerung und/oder Überwachung der Sicherheitskomponente vorgesehen.

Die Steuerungskomponente kann beispielsweise eingerichtet sein um einen Signalgeber der Sicherheitskomponente anzusteuern, wenn die Tür geschlossen wird oder geschlossen werden soll. Die Steuerungskomponente kann außerdem eingerichtet sein um Sensorik der Sicherheitskomponente, beispielsweise eine Lichtschranke und/oder eine Sicherheitskontaktleiste, auszuwerten um gegebenenfalls ein Unterbrechungssignal auszulösen um eine Bewegung des Türelements, insbesondere ein Schließen der Tür, zu stoppen.

Die Steuerungskomponente kann auch eingerichtet sein um ein Unterbrechungssignal der Sicherheitskomponente an die Aktuatoreinrichtung zum Stoppen einer Bewegung der Tür weiterzuleiten. Erfindungsgemäß ist vorgesehen, dass die Sicherheitskomponente und die Steuerungskomponente ausgebildet sind, um miteinander drahtlos elektrische Datensignale auszutauschen.

Eine drahtlose Datenkommunikation zwischen der Sicherheitskomponente und der Steuerungskomponente ist erfindungsgemäß, da in diesem Falle in der Regel vollständig auf eine Kabelverbindung zwischen dem Türelement und dem Türrahmen verzichtet werden kann. Grundsätzlich kann allerdings bereits eine Reduzierung der Leitungen in dem Kabelbaum von Vorteil sein, was bereits durch die autarke Energieversorgung des Türelements in seinem geöffneten Zustand gewährleistet sein kann.

Die Sicherheitskomponente und die Steuerungskomponente können jeweils ein Funkmodul aufweisen, um die drahtlose Datenkommunikation auszubilden.

Sofern weitere Sicherheitskomponenten, beispielsweise an weiteren Türelementen, vorgesehen sind kann jede der Sicherheitskomponenten ein eigenes Funkmodul aufweisen. Vorzugsweise ist für jede Tür oder sogar für jedes Transportmittel allerdings nur genau eine Steuerungskomponente mit genau einem Funkmodul vorgesehen, das mit allen Funkmodulen der Sicherheitskomponenten kommuniziert.

In einer vorteilhaften Weiterbildung der Erfindung kann vorgesehen sein, dass die Sicherheitskomponente und die Steuerungskomponente ausgebildet sind um die Datensignale drahtlos unter Verwendung eines Funkstandards auszutauschen, insbesondere unter Verwendung eines Funkstandards innerhalb des ISM-Bandes.

Erfindungsgemäß ist eine bidirektionale Datenkommunikation zwischen der Sicherheitskomponente und der Steuerungskomponente vorgesehen.

Wie bereits erwähnt kann es, sofern mehrere Türelemente bzw. Sicherheitskomponenten vorgesehen sind, bereits ausreichend sein, wenn eine gemeinsame Steuerungskomponente die Datenkommunikation mit allen Sicherheitskomponenten übernimmt.

Bei dem Funkstandard kann es sich beispielsweise um einen Bluetooth-Standard, einen ZigBee-Standard oder einen sonstigen Funkstandard handeln.

Besonders bevorzugt ist ein WLAN-Standard vorgesehen. Das Funkmodul der Steuerungskomponente kann somit ein WLAN-Netzwerk aufbauen, in dem sich die Funkmodule der Sicherheitskomponente zum Datenaustausch anmelden können. Vorzugsweise ist ein verschlüsseltes und/oder unsichtbares WLAN-Netzwerk vorgesehen.

In einer vorteilhaften Weiterbildung der Erfindung kann vorgesehen sein, dass es sich bei dem Transportmittel um einen Omnibus, ein Schienenfahrzeug, ein Luftfahrzeug, eine Seilbahnkabine oder eine Aufzugskabine handelt.

Grundsätzlich kann es sich aber um ein beliebiges Transportmittel handeln, beispielsweise auch um ein Kraftfahrzeug, ein Nutzfahrzeug oder ein Raumfahrzeug, insbesondere aber um ein Transportmittel des öffentlichen Nahverkehrs.

In einer Weiterbildung der Erfindung kann vorgesehen sein, dass das bewegliche Türelement als Türflügel (auch als "Türblatt" bezeichnet) ausgebildet ist.

Grundsätzlich kann es sich bei dem Türelement aber um ein beliebiges bewegliches Element der Tür handeln.

Gemäß einer Weiterbildung der Erfindung kann vorgesehen sein, dass genau ein bewegliches Türelement vorgesehen ist. Es kann aber auch vorgesehen sein, dass genau zwei bewegliche Türelemente vorgesehen sind, wobei jedes der Türelemente eine korrespondierende Sicherheitskomponente aufweist, die von der Versorgungskomponente des Türrahmens elektrisch versorgt wird.

Sofern die Tür zwei Türelemente aufweist sind diese vorzugsweise zum Schließen der Tür aufeinander zu bewegbar und zum Öffnen der Tür voneinander weg bewegbar.

Grundsätzlich können auch Türen mit mehr als zwei Türelementen vorgesehen sein.

In einer vorteilhaften Weiterbildung der Erfindung kann vorgesehen sein, dass eine Aktuatoreinrichtung an dem unbeweglichen Türrahmen angeordnet ist, um das wenigstens eine Türelement automatisch zu öffnen oder zu schließen.

Die Aktuatoreinrichtung umfasst insbesondere einen Elektromotor pro Türelement, wobei aber auch ein gemeinsamer Elektromotor für alle Türelemente der Tür vorgesehen sein kann. Anstelle eines Elektromotors kann aber auch ein Motor eines anderen Typs, beispielsweise ein hydraulischer oder pneumatischer Motor, vorgesehen sein.

Die Aktuatoreinrichtung kann ferner eine entsprechend geeignete Mechanik aufweisen, insbesondere spezielle Scharniere und/oder Schwenkarme, um die Türelemente zu öffnen.

Die Tür kann insbesondere als Schiebetür, Schwenkschiebetür, Drehschwenktür, Drehtür, Falltür, Innenschwenktür, Außenschwenktür oder sonstige Tür ausgebildet sein.

Die Erfindung betrifft auch ein Transportmittel, insbesondere einen Omnibus oder ein Schienenfahrzeug, mit wenigstens einer Tür gemäß den vorstehenden und nachfolgenden Ausführungen.

Der Begriff "Transportmittel" beschreibt dabei jegliches Fortbewegungsmittel, insbesondere Fahrzeuge zu Lande, zu Wasser oder in der Luft, eingeschlossen auch Raumfahrzeuge.

Das Transportmittel kann eine beliebige Anzahl Türen aufweisen, beispielsweise genau eine Tür, zwei oder mehr Türen, drei oder mehr Türen, vier oder mehr Türen, fünf oder mehr Türen oder sechs oder noch mehr Türen. Sofern mehr als eine Tür vorgesehen ist können in dem Transportmittel auch unterschiedliche Arten vom Türen miteinander kombiniert sein, beispielsweise Türen mit nur einem beweglichen Türelement und Türen mit zwei Türelementen.

Außerdem betrifft die Erfindung auch ein Verfahren zum Betrieb einer automatischen Tür für ein Transportmittel mit einem Türsicherheitssystem. Dabei ist vorgesehen dass eine an einem beweglichen Türelement der Tür angeordnete Sicherheitskomponente von einer an einem unbeweglichen Türrahmen der Tür angeordneten Versorgungskomponente elektrisch versorgt wird. Weiter ist vorgesehen, dass die Sicherheitskomponente im geöffneten Zustand der Tür autark von einem eigenen elektrischen Energiespeicher mit elektrischer Energie versorgt wird, der von der Versorgungskomponente ausschließlich im geschlossenen Zustand der Tür elektrisch aufgeladen wird.

Vorzugsweise überträgt die Sicherheitskomponente ein elektrisches Unterbrechungssignal an eine zum Bewegen des Türelements verwendete Aktuatoreinrichtung oder veranlasst die Übertragung des Unterbrechungssignals von einer anderen Stelle, beispielsweise von der Steuerungskomponente des Türrahmens, um einen automatischen Schließvorgang der Tür durch die Aktuatoreinrichtung zu unterbrechen, wenn die Sicherheitskomponente eine Kollision oder eine bevorstehende Kollision des Türelements mit einem Lebewesen oder einem Gegenstand erfasst.

Vorzugsweise lädt die Versorgungskomponente den elektrischen Energiespeicher der Sicherheitskomponente im geschlossenen Zustand der Tür drahtlos, vorzugsweise induktiv.

Im Rahmen des erfindungsgemäßen Verfahrens wird eine an dem Türrahmen angeordnete Steuerungskomponente zur Steuerung und/oder Überwachung der Sicherheitskomponente verwendet. Erfindungsgemäß kommunizieren die Steuerungskomponente und die Sicherheitskomponente hierzu drahtlos und bidirektional, insbesondere über eine WLAN-Verbindung.

Die Erfindung betrifft auch ein Computerprogrammprodukt mit Programmcodemitteln, um ein Verfahren gemäß der vorstehenden Ausführung durchzuführen, wenn das Programm auf einer Steuereinrichtung eines Türsicherheitssystems (gemäß den vorstehenden Ausführungen) ausgeführt wird.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Nachfolgend werden Ausführungsbeispiele der Erfindung anhand der Zeichnung näher beschrieben. Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: einen Omnibus mit mehreren Türen, die mit einem erfindungsgemäßen Türsicherheitssystem ausgestattet sind;
- Figur 2: eine erfindungsgemäße Tür mit einem Türrahmen, zwei beweglichen Türelementen und vorteilhaften Elektronikkomponenten des Türsicherheitssystems;
- Figur 3: ein Blockschaltbild der Elektronikkomponenten des Türrahmens; und
- Figur 4: ein Blockschaltbild der Elektronikkomponenten eines der beweglichen Türelemente.

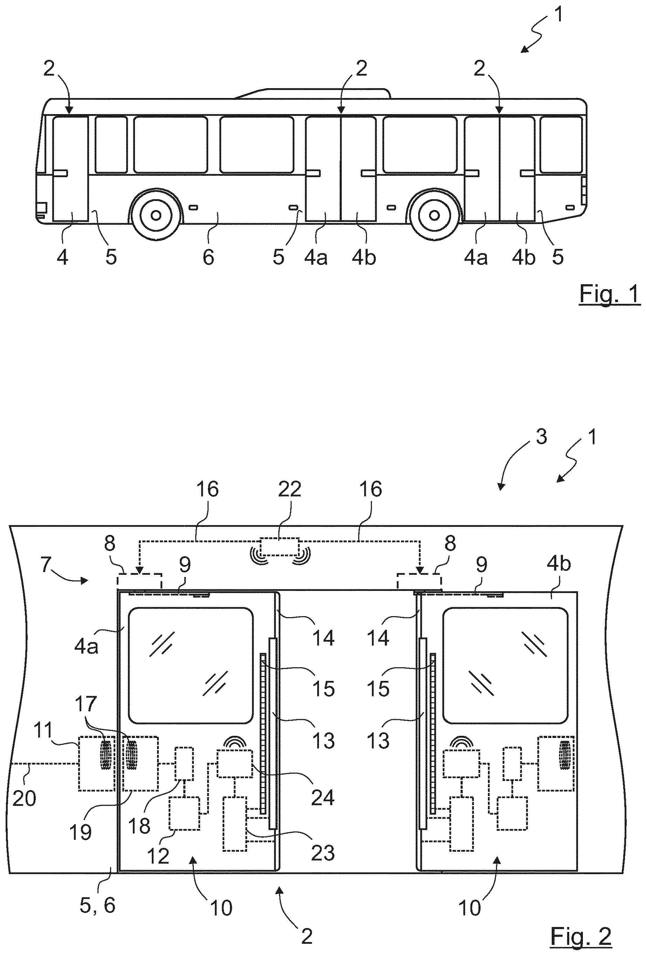

Figur 1 zeigt in einer Seitenansicht schematisch einen Omnibus 1 mit mehreren automatischen Türen 2, die mit einem erfindungsgemäßen und nachfolgend noch im Detail beschriebenen Türsicherheitssystem 3 (vgl. Figur 2) ausgestattet sein können.

Die Erfindung wird in den Figuren 1 und 2 rein beispielhaft zur Verwendung mit einem Omnibus 1 gezeigt. Grundsätzlich eignet sich die Erfindung zur Verwendung mit einer beliebigen Tür, insbesondere aber zur Verwendung mit einer Tür 2 eines Transportmittels. Vorzugsweise kann ein Omnibus 1 oder ein Schienenfahrzeug vorgesehen sein. Es kann sich bei dem Transportmittel aber beispielsweise auch um ein Luftfahrzeug, eine Seilbahnkabine oder eine Aufzugskabine handelt.

Die Tür 2 kann grundsätzlich beliebig ausgebildet sein und weist jeweils wenigstens ein bewegliches Türelement 4, 4a, 4b und einen unbeweglichen Türrahmen 5 auf. Bei dem Türrahmen 5 handelt es sich um die Umrahmung des Türelements 4, 4a, 4b. Der Türrahmen 5 kann an einer umgebenden Struktur befestigt sein oder in eine umgebende Struktur übergehen bzw. mit einer umgebenden Struktur einteilig ausgebildet sein. Somit können beispielsweise auch mehrere Türen 2 einen gemeinsamen Türrahmen 5 aufweisen. Der Türrahmen 5 kann im Sinne der Erfindung auch als Synonym für eine relativ zu den Türelementen 4, 4a, 4b unbewegliche Komponente interpretiert werden, insbesondere wenn es sich bei dem Türrahmen 5 nicht um eine eigenständige, abgegrenzte Baugruppe handelt die eindeutig der Tür 2 zuzuordnen ist. Im Ausführungsbeispiel geht der Türrahmen 5 in die Karosserie 6 des Omnibusses 1 über. Wenn somit nachfolgend davon gesprochen wird, dass eine bestimmte Elektronikkomponente oder sonstige Komponente an dem Türrahmen 5 angeordnet ist, so kann diese Komponente grundsätzlich auch an einer anderen unbeweglichen Stelle in dem Omnibus 1 bzw. an der Karosserie 6 des Omnibusses 1 angeordnet sein; vorzugsweise befindet sich die Elektronikkomponente oder sonstige Komponente allerdings möglichst ortsnah an den beweglichen Türelementen 4, 4a, 4b und besonders bevorzugt an dem Türrahmen 5 im eigentlichen Sinne.

Der in Figur 1 beispielhaft dargestellte Omnibus 1 weist eine vordere Tür 2 auf, bei der genau ein bewegliches Türelement 4 vorgesehen ist sowie eine mittlere Tür 2 und eine hintere Tür 2 die jeweils genau zwei Türelemente 4a, 4b aufweisen. Die Türelemente 4, 4a, 4b sind jeweils als Türflügel ausgebildet.

Figur 2 zeigt eine Ausschnittsvergrößerung einer der Doppeltüren 2 des Omnibusses 1 der Figur 1. Dabei sind rein exemplarisch ein erstes Türelement 4a in einem geschlossenen Zustand und ein zweites Türelement 4b in einem geöffneten Zustand gezeigt. Um die Türelemente 4a, 4b automatisch zu öffnen oder zu schließen ist an dem unbeweglichen Türrahmen 5 eine Aktuatoreinrichtung 7 angeordnet.

In dem in Figur 2 gezeigten Ausführungsbeispiel weist die Aktuatoreinrichtung 7 jeweils einen Elektromotor 8 mit einem jeweiligen Schwenkarm 9 pro Türelement 4a, 4b auf (in Figur 2 gestrichelt dargestellt, da sich der Elektromotor 8 und der Schwenkarm 9 auf der Innenseite des Omnibusses 1 befinden). Grundsätzlich kann auch nur ein einziger Elektromotor 8 vorgesehen sein, der beide Türelemente 4a, 4b synchron öffnet oder schließt. Die Flexibilität bei der Ansteuerung der Tür 2 kann allerdings erhöht sein wenn für jedes der Türelemente 4a, 4b ein eigener Elektromotor 8 verwendet wird. Ferner kann der mechanische Aufbau bei Verwendung von zwei Elektromotoren 8 vereinfacht sein.

Das dargestellte Türsicherheitssystem 3 weist an jedem der beweglichen Türelemente 4a, 4b der Tür 2 eine Sicherheitskomponente 10 auf. Ferner weist der unbewegliche Türrahmen 5 der Tür 2 jeweils eine korrespondierende Versorgungskomponente 11 auf (die dem zweiten Türelement 4b zugeordnete Versorgungskomponente 11 ist in Figur 2 durch das geöffnete Türelement 4b allerdings verdeckt).

Die Elektronikkomponenten sind in der Figur 2 gestrichelt dargestellt und in der Regel in den Türelementen 4a, 4b bzw. in dem Türrahmen 5 aufgenommen. Die Elektronikkomponenten können gegebenenfalls durch zusätzliche Gehäusekomponenten verkleidet sein. Die Elektronikkomponenten können auch elektromagnetisch abgeschirmt sein, wobei aber darauf zu achten ist, dass die nachfolgend noch beschriebene drahtlose Energie- und Datenübertragung hierdurch nicht beeinträchtigt wird.

Jede der Sicherheitskomponenten 10 weist einen elektrischen Energiespeicher 12 auf der ausgebildet ist, um die Sicherheitskomponente 10 im geöffneten Zustand der Tür 2 autark mit elektrischer Energie zu versorgen. Im geschlossenen Zustand der Tür 2 vermag die korrespondierende Versorgungskomponente 11 den elektrischen Energiespeicher 12 der zugeordneten Sicherheitskomponente 10 elektrisch aufzuladen. Auf diese Weise können Kabelbäume zwischen dem feststehenden Türrahmen 5 und den beweglichen Türelementen 4, 4a, 4b zur Energieversorgung deren Sicherheitskomponenten 10 entfallen.

Vorzugsweise ist die Sicherheitskomponente 10 zum Schutz von Lebewesen oder Gegenständen ausgebildet. Hierzu können verschiedene Sicherheitssysteme, insbesondere auch in Kombination miteinander, vorgesehen sein. Beispielsweise kann die Sicherheitskomponente 10 eine Lichtschranke bzw. einen Lichtvorhang 13 zur Erfassung von Lebewesen oder Gegenständen im Schließbereich der Tür 2, eine Sicherheitskontaktleiste 14 zur Erfassung einer Kollision des Türelements 4, 4a, 4b mit einem Lebewesen oder einem Gegenstand und einen optischen, akustischen oder haptischen Signalgeber, beispielsweise die dargestellte Lichtleiste 15, zur Warnung von Lebewesen aufweisen.

Die Sicherheitskomponente 10 kann ausgebildet sein, um ein elektrisches Unterbrechungssignal 16 an die zum Bewegen des Türelements 4, 4a, 4b verwendete Aktuatoreinrichtung 7 oder deren Elektromotoren 8 zu übertragen oder eine Übertragung eines Unterbrechungssignals 16 auszulösen, um einen automatischen Schließvorgang der Tür 2 zu unterbrechen. Das Prinzip des Erzeugens oder Auslösens des Unterbrechungssignals 16 wird im Folgenden noch näher erläutert.

Der elektrische Energiespeicher 12 der Sicherheitskomponente 10 kann insbesondere als Akkupack mit wenigstens einer Akkuzelle ausgebildet sein. Vorzugsweise ist ein Lithium-lonen-Akkupack mit mehreren Akkuzellen vorgesehen, beispielsweise vier Akkuzellen in einer Reihenschaltung.

Die Sicherheitskomponente 10 und die Versorgungskomponente 11 sind ausgebildet, um den elektrischen Energiespeicher 12 der Sicherheitskomponente 10 im geschlossenen Zustand der Tür 2 drahtlos, im Ausführungsbeispiel induktiv unter Verwendung von geeigneten Spulen 17, elektrisch aufzuladen. Im geschlossenen Zustand der Tür 2 sind die Spulen 17 ausreichend nah aneinander positioniert und derart aufeinander ausgerichtet, dass eine elektrische Energieübertragung von der Versorgungskomponente 11 zu der Sicherheitskomponente 10 erfolgen kann. Sobald die Tür 2 geöffnet wird entfernen sich durch die Öffnungsbewegung des Türelements 4, 4a, 4b die Spulen 17 voneinander bis eine Energieübertragung nicht mehr möglich ist. Insbesondere ab diesem Zeitpunkt kann sich die Sicherheitskomponente 10 des Türelements 4, 4a, 4b durch den Energiespeicher 12 allerdings selbst mit elektrischer Energie versorgen. Die Zeitfenster in denen die Tür 2 nicht geschlossen ist (beispielsweise geöffnet wird oder vollständig geöffnet ist) und damit auch nicht von dem Türrahmen 5 elektrisch versorgt werden kann können somit vorteilhaft überbrückt werden.

Zum Aufladen des elektrischen Energiespeichers 12 kann die Sicherheitskomponente eine geeignete Ladeeinrichtung bzw. ein Batteriemanagementsystem (BMS) 18 aufweisen.

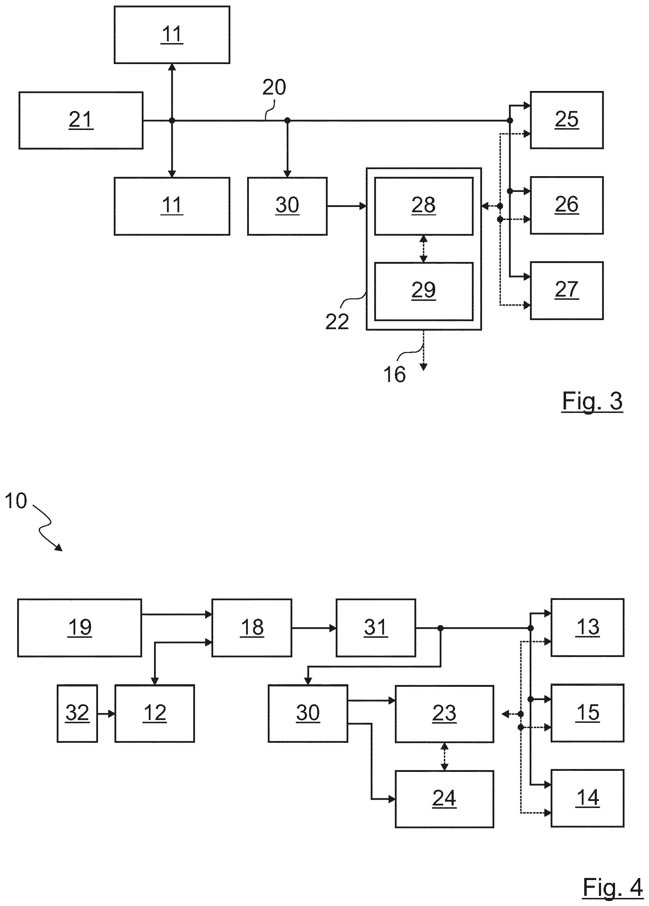

Die Energieversorgung der Versorgungskomponente 11 kann über eine elektrische Versorgungsleitung 20 zu der Fahrzeugbordelektrik bzw. einer Fahrzeugstromquelle 21 (vgl. Figur 3), beispielsweise einer Fahrzeugbatterie, erfolgen. Dies ist vergleichsweise einfach möglich, da die Versorgungskomponente 11 relativ zu der Karosserie 6 unbeweglich angeordnet ist.

Alternativ zu einer drahtlosen Energieübertragung zwischen der Versorgungskomponente 11 und der Sicherheitskomponente 10 kann grundsätzlich auch eine kontaktbasierte Energieübertragung vorgesehen sein. Die Sicherheitskomponente 10 und die Versorgungskomponente 11 können hierzu ausgebildet sein, um den elektrischen Energiespeicher 12 der Sicherheitskomponente 10 der Tür 2 elektrisch aufzuladen, indem ein an dem Türelement 4, 4a, 4b angeordnetes und mit der Sicherheitskomponente 10 elektrisch verbundenes Kontaktelement (nicht dargestellt) im geschlossenen Zustand der Tür 2 ein an dem Türrahmen 5 angeordnetes und mit der Versorgungskomponente 11 elektrisch verbundenes Gegenkontaktelement (nicht dargestellt) kontaktiert. Diese Variante der Erfindung ist allerdings nicht bevorzugt.

An dem Türrahmen 5 ist eine Steuerungskomponente 22 zur Steuerung und/oder Überwachung der Sicherheitskomponente 10 vorgesehen. Die Sicherheitskomponente 10 und die Steuerungskomponente 22 sind ausgebildet, um miteinander drahtlos elektrische Datensignale auszutauschen, beispielsweise Signale des Lichtvorhangs 13 oder der Sicherheitskontaktleiste 14. Somit kann die Steuerungskomponente 22 beispielsweise erfassen, ob eine Kollision der Türelemente 4, 4a, 4b mit einem Objekt erfolgt ist, wonach die Steuerungskomponente 22 das Unterbrechungssignal 16 zum Stoppen der Bewegung der Tür 2 an die Aktuatoreinrichtung 7 bzw. an die Elektromotoren 8 übertragen kann.

Es kann auch vorgesehen sein, dass die Steuerungskomponente 22 die Datensignale der Sicherheitskomponente 10 lediglich an entsprechende Steuereinheiten weiterleitet und diese nicht selbst auswertet. Die Steuerungskomponente 22 kann dann als Vermittler dienen um den drahtlosen Signalpfad zu überbrücken. Bestehende Elektronik kann somit vergleichsweise einfach nachgerüstet werden. Das Prinzip wird später noch anhand der Figur 4 näher erklärt.

Die Steuerungskomponente 22 kann aber auch ein von der Sicherheitskomponente 10 erzeugtes Unterbrechungssignal 16 direkt weiterleiten. Eine Steuereinrichtung 23 der Sicherheitskomponente 10 kann hierzu die Informationen bzw. Daten der einzelnen Sicherheitssysteme, beispielsweise also des Lichtvorhangs 13 und der Sicherheitskontaktleiste 14, bereits selbst auswerten.

Außerdem kann die Steuerungskomponente 22 die Elektronikkomponenten der Sicherheitskomponente 10, beispielsweise die Lichtleiste 15, ansteuern. Es kann somit auch eine bidirektionale Kommunikation vorgesehen sein.

Vorzugsweise sind die Sicherheitskomponente 10 und die Steuerungskomponente 22 ausgebildet um die Datensignale drahtlos unter Verwendung eines Funkstandards auszutauschen, insbesondere unter Verwendung eines Funkstandards innerhalb des ISM-Bandes. Vorzugsweise erzeugt die Steuerungskomponente 22 ein WLAN-Funknetz in das sich einzelne Funkmodule 24 der Sicherheitskomponenten 10 zur Datenübertragung einwählen können.

Die Figuren 3 und 4 zeigen zur Verdeutlichung der elektrischen Verschaltung des Türsicherheitssystems 3 beispielhaft Blockschaltbilder der Elektronikkomponenten des Türrahmens 5 bzw. der Versorgungskomponente 11 und der Steuerungskomponente 22 (Figur 3) und des beweglichen Türelements 4, 4a, 4b bzw. der Sicherheitskomponente 10 (Figur 4).

Die einzelnen Elektronikkomponenten sind in den Figuren 3 und 4 lediglich beispielhaft in Kombination miteinander dargestellt. Insbesondere können einzelne Elektronikkomponenten auch entfallen oder mit weiteren Elektronikkomponenten kombiniert werden. Insbesondere sind auch die beschriebenen Spannungswerte nur beispielhaft zu verstehen.

Datensignale sind in den Figuren 3 und 4 strichliniert und Versorgungssignale mit durchgezogenen Linien dargestellt.

Zur elektrischen Energieversorgung der Versorgungskomponente 11 und der Steuerungskomponente 22 kann die bereits genannte Fahrzeugstromquelle 21 verwendet werden, die beispielsweise eine elektrische Gleichspannung von nominal 24 Volt bereitstellen kann. Die Versorgungsleitung 20 kann zu einem oder zu mehreren Versorgungskomponenten 11 führen, die die elektrische Energie bei geschlossener Tür 2 an den jeweils korrespondierenden kabellosen Energieempfänger 19 (vgl. Figur 4) der Sicherheitskomponente 10 übertragen können (beispielsweise unter Verwendung der in Figur 2 dargestellten Spulen 17). Jedes Türelement 4a, 4b wird somit vorzugsweise von einer eigenen Versorgungskomponente 11 des Türrahmens 5 elektrisch versorgt. Sofern nur ein Türelement 4 vorgesehen ist, kann beispielsweise die in der Figur 3 obere Versorgungskomponente 11 entfallen.

Einzelne Steuereinheiten des Türsicherheitssystems können zur Steuerung und/oder Überwachung der jeweiligen Sicherheitssysteme der Sicherheitskomponenten 10 ebenfalls von der Fahrzeugstromquelle 21 versorgt werden. Beispielsweise können eine erste Steuereinheit 25 zur Steuerung und/oder Überwachung des Lichtvorhangs 13, eine zweite Steuereinheit 26 zur Steuerung und/oder Überwachung der Lichtleiste 15 und eine dritte Steuereinheit 27 zur Steuerung und/oder Überwachung der Sicherheitskontaktleiste 14 vorgesehen sein.

Auch die Steuerungskomponente 22 kann von der Fahrzeugstromquelle 21 versorgt werden. Die Steuerungskomponente 22 kann eine Steuereinrichtung 28 aufweisen die mit den einzelnen Steuereinheiten 25, 26, 27 kommunikationsverbunden ist. Die Steuereinrichtung 28 kann über ein Funkmodul 29 mit den Sicherheitskomponenten 10 der Türelemente 4, 4a, 4b drahtlos verbunden sein, insbesondere um die von den jeweiligen Sicherheitskomponenten 10 erfassten Daten des Lichtvorhangs 13 und der Sicherheitskontaktleiste 14 an die erste Steuereinheit 25 und die dritte Steuereinheit 27 weiterzuleiten und um die Steuersignale zur Ansteuerung der Lichtleiste 15 von der zweiten Steuereinheit 26 an die Lichtleiste 15 des jeweiligen Türelements 4, 4a, 4b weiterzuleiten. Die Steuerungskomponente 22 dient somit als Vermittler zwischen der drahtlosen Wegstrecke. Hierdurch kann eine üblicherweise erforderliche direkte Kabelverbindung zwischen den Sicherheitssystemen der Sicherungskomponente 22 und den einzelnen Steuereinheiten 25, 26, 27 vorteilhaft entfallen.

Zur Energieversorgung der einzelnen in dem Türrahmen 5 angeordneten Elektronikkomponenten können auch Spannungswandler, insbesondere Gleichspannungswandler, verwendet werden. Beispielhaft ist zur Versorgung der Steuerungskomponente 22 in Figur 3 ein Abwärtswandler 30 dargestellt, um für die Versorgung der Steuerungskomponente 22 z. B. eine Versorgungsspannung von nominal 5 Volt bereitzustellen. Der Abwärtswandler 30 kann beispielsweise auch in einer der Versorgungskomponenten 11 integriert sein.

Wie sich aus dem Blockschaltbild der Figur 4 ergibt erfolgt die elektrische Versorgung der Elektronikkomponenten der Sicherheitskomponente 10 grundsätzlich über den elektrischen Energiespeicher 12 der Sicherheitskomponente 10, wobei der Energiespeicher 12 durch die von dem drahtlosen Energieempfänger 19 empfangene elektrische Versorgungsspannung von beispielsweise 19 bis 20 Volt unter Verwendung einer Ladeeinrichtung bzw. eines Batteriemanagementsystem 18 elektrisch geladen werden kann (zumindest wenn die Tür 2 geschlossen ist).

Das Batteriemanagementsystem 18 vermag die Spannung des Energiespeichers 12, vorliegend eines Akkupacks, an einen Gleichspannungswandler, beispielsweise einen Aufwärtswandler 31, weiterzugeben, der die weiteren Elektronikkomponenten elektrisch versorgt, beispielsweise mit einer der Versorgungsspannung der Fahrzeugstromquellen 21 entsprechenden Gleichspannung von nominal 24 Volt. Wiederum kann optional auch ein Abwärtswandler 30 vorgesehen sein, um weitere Elektronikkomponenten beispielsweise mit nominal 5 Volt zu versorgen.

Optional kann ein sogenannter Balancer 32 ("Ausgleichsregler") vorgesehen sein, um eine gleichmäßige Ladungsverteilung zwischen mehreren Akkuzellen des Akkupacks und gegebenenfalls auch einen Überladungs- und Tiefentladeschutz bereitzustellen. Der Balancer 32 bzw. der Überladungsschutz/Tiefentladeschutz kann auch Teil des Batteriemanagementsystems 18 sein.

Die Sicherheitskomponente 10 kann die bereits erwähnte Steuereinrichtung 23 aufweisen, die mit dem Funkmodul 24 verbunden ist, um über das Funkmodul 29 der Steuerungskomponente 22 mit der Steuereinrichtung 28 des Türrahmens 5 drahtlos zu kommunizieren. Hierdurch können die Daten zwischen dem Lichtvorhang 13 und der ersten Steuereinheit 25, zwischen der Lichtleiste 15 und der zweiten Steuereinheit 26 und zwischen der Sicherheitskontaktleiste 14 und der dritten Steuereinheit 27 ausgetauscht werden.

Die Funkmodule 24, 29 und die Steuereinheiten 23, 28 vermögen somit eine herkömmliche Kabelverbindung zwischen den Elektronikkomponenten des Türrahmens 5 und der beweglichen Türelemente 4, 4a, 4b zu ersetzen.

## Patentansprüche

1. Automatische Tür (2) für ein Transportmittel (1), mit einem Türrahmen (5), wenigstens einem beweglichen Türelement (4, 4a, 4b) und einem Türsicherheitssystem (3) für die Tür (2), wobei das Türsicherheitssystem (3) eine an dem beweglichen Türelement (4, 4a, 4b) der Tür (2) angeordnete Sicherheitskomponente (10), eine an dem unbeweglichen Türrahmen (5) der Tür (2) angeordnete Versorgungskomponente (11) zur elektrischen Versorgung der Sicherheitskomponente (10) und eine an dem Türrahmen (5) angeordnete Steuerungskomponente (22) zur Steuerung und/oder Überwachung der Sicherheitskomponente (10) aufweist, wobei die Sicherheitskomponente (10) einen elektrischen Energiespeicher (12) aufweist der ausgebildet ist, um die Sicherheitskomponente (10) im geöffneten Zustand der Tür (2) autark mit elektrischer Energie zu versorgen, und wobei die Sicherheitskomponente (10) und die Versorgungskomponente (11) ausgebildet sind, um den elektrischen Energiespeicher (12) der Sicherheitskomponente (10) ausschließlich im geschlossenen Zustand der Tür (2) elektrisch aufzuladen,
**dadurch gekennzeichnet,dass**
die Sicherheitskomponente (10) und die Steuerungskomponente (22) ausgebildet sind, um miteinander drahtlos und bidirektional elektrische Datensignale auszutauschen.

2. Automatische Tür (2) nach Anspruch 1,
**dadurch gekennzeichnet, dass**
die Sicherheitskomponente (10) zum Schutz von Lebewesen oder Gegenständen ausgebildet ist.

3. Automatische Tür (2) nach Anspruch 1 oder 2,
**dadurch gekennzeichnet, dass**
die Sicherheitskomponente (10) eine Lichtschranke (13) zur Erfassung von Lebewesen oder Gegenständen im Schließbereich der Tür (2), eine Sicherheitskontaktleiste (14) zur Erfassung einer Kollision des Türelements (4, 4a, 4b) mit einem Lebewesen oder einem Gegenstand und/oder einen optischen, akustischen oder haptischen Signalgeber (15) zur Warnung von Lebewesen aufweist.

4. Automatische Tür (2) nach einem der Ansprüche 1 bis 3,
**dadurch gekennzeichnet, dass**
die Sicherheitskomponente (10) ausgebildet ist, um ein elektrisches Unterbrechungssignal (16) an eine zum Bewegen des Türelements (4, 4a, 4b) verwendete Aktuatoreinrichtung (7) zu übertragen oder eine Übertragung eines Unterbrechungssignals (16) an die Aktuatoreinrichtung (7) auszulösen, um einen automatischen Schließvorgang der Tür (2) durch die Aktuatoreinrichtung (7) zu unterbrechen.

5. Automatische Tür (2) nach einem der Ansprüche 1 bis 4,
**dadurch gekennzeichnet, dass**
die Sicherheitskomponente (10) und die Versorgungskomponente (11) ausgebildet sind, um den elektrischen Energiespeicher (12) der Sicherheitskomponente (10) im geschlossenen Zustand der Tür (2) drahtlos, vorzugsweise induktiv, elektrisch aufzuladen.

6. Automatische Tür (2) nach einem der Ansprüche 1 bis 5,
**dadurch gekennzeichnet, dass**
die Sicherheitskomponente (10) und die Versorgungskomponente (11) ausgebildet sind, um den elektrischen Energiespeicher (12) der Sicherheitskomponente (10) der Tür (2) elektrisch aufzuladen, indem ein an dem Türelement (4, 4a, 4b) angeordnetes und mit der Sicherheitskomponente (10) elektrisch verbundenes Kontaktelement im geschlossenen Zustand der Tür (2) ein an dem Türrahmen (5) angeordnetes und mit der Versorgungskomponente (11) elektrisch verbundenes Gegenkontaktelement kontaktiert.

7. Automatische Tür (2) nach einem der Ansprüche 1 bis 6,
**dadurch gekennzeichnet, dass**
die Sicherheitskomponente (10) und die Steuerungskomponente (22) ausgebildet sind um die Datensignale drahtlos unter Verwendung eines Funkstandards auszutauschen, insbesondere unter Verwendung eines Funkstandards innerhalb des ISM-Bandes.

8. Automatische Tür (2) nach einem der Ansprüche 1 bis 7,
**dadurch gekennzeichnet, dass**
es sich bei dem Transportmittel um einen Omnibus (1), ein Schienenfahrzeug, ein Luftfahrzeug, eine Seilbahnkabine oder eine Aufzugskabine handelt.

9. Automatische Tür (2) nach einem der Ansprüche 1 bis 8,
**dadurch gekennzeichnet, dass**
das bewegliche Türelement (4, 4a, 4b) als Türflügel ausgebildet ist.

10. Automatische Tür (2) nach einem der Ansprüche 1 bis 9,
**dadurch gekennzeichnet, dass**
a) genau ein bewegliches Türelement (4, 4a, 4b) vorgesehen ist; oder
b) genau zwei bewegliche Türelemente (4, 4a, 4b) vorgesehen sind, wobei jedes der Türelemente (4, 4a, 4b) eine korrespondierende Sicherheitskomponente (10) aufweist, die von der Versorgungskomponente (11) des Türrahmens (5) elektrisch versorgt wird.

11. Automatische Tür (2) nach einem der Ansprüche 1 bis 10,
**dadurch gekennzeichnet, dass**
eine Aktuatoreinrichtung (7) an dem unbeweglichen Türrahmen (5) angeordnet ist, um das wenigstens eine Türelement (4, 4a, 4b) automatisch zu öffnen oder zu schließen.

12. Transportmittel, insbesondere Omnibus (1) oder Schienenfahrzeug, mit wenigstens einer Tür (2) nach einem der Ansprüche 1 bis 11.

13. Verfahren zum Betrieb einer automatischen Tür (2) für ein Transportmittel (1) mit einem Türsicherheitssystem (3), wonach eine an einem beweglichen Türelement (4, 4a, 4b) der Tür (2) angeordnete Sicherheitskomponente (10) von einer an einem unbeweglichen Türrahmen (5) der Tür (2) angeordneten Versorgungskomponente (11) elektrisch versorgt wird, wobei die Sicherheitskomponente (10) im geöffneten Zustand der Tür (2) autark von einem eigenen elektrischen Energiespeicher (12) mit elektrischer Energie versorgt wird, der von der Versorgungskomponente (11) ausschließlich im geschlossenen Zustand der Tür (2) elektrisch aufgeladen wird, und wobei eine an dem Türrahmen (5) angeordnete Steuerungskomponente (22) zur Steuerung und/oder Überwachung der Sicherheitskomponente (10) verwendet wird,
**dadurch gekennzeichnet, dass**
die Steuerungskomponente (22) und die Sicherheitskomponente (10) drahtlos und bidirektional miteinander kommunizieren.

14. Computerprogrammprodukt mit Programmcodemitteln, um ein Verfahren gemäß Anspruch 13 durchzuführen, wenn das Programm auf einer Steuereinrichtung (23, 28) eines Türsicherheitssystems (3) ausgeführt wird.

## Claims

1. Automatic door (2) for a transport means (1), having a door frame (5), at least one movable door element (4, 4a, 4b) and a door safety system (3) for the door (2), wherein the door safety system (3) has a safety component (10) arranged on a movable door element (4, 4a, 4b) of the door (2), a supply component (11) which is arranged on an immovable door frame (5) of the door (2) and is intended to supply the safety component (10) with electricity, and a control component (22) arranged on the door frame (5) for the purpose of controlling and/or monitoring the safety component (10), wherein the safety component (10) has an electrical energy store (12) which is designed to autonomously supply the safety component (10) with electrical energy in the open state of the door (2), and wherein the safety component (10) and the supply component (11) are designed to electrically charge the electrical energy store (12) of the safety component (10) only in the closed state of the door (2),
**characterized in that**
the safety component (10) and the control component (22) are designed to wirelessly and bidirectionally interchange electrical data signals with one another.

2. Automatic door (2) as claimed in claim 1,
**characterized in that**
the safety component (10) is designed to protect living beings or objects.

3. Automatic door (2) as claimed in claim 1 or 2,
**characterized in that**
the safety component (10) has a light barrier (13) for detecting living beings or objects in the closing region of the door (2), a safety contact strip (14) for detecting a collision of the door element (4, 4a, 4b) with a living being or an object and/or an optical, acoustic or haptic signal generator (15) for warning living beings.

4. Automatic door (2) as claimed in one of claims 1 to 3,
**characterized in that**
the safety component (10) is designed to transmit an electrical interruption signal (16) to an actuator device (7) used to move the door element (4, 4a, 4b) or to initiate transmission of an interruption signal (16) to the actuator device (7) in order to interrupt an automatic closing operation of the door (2) by means of the actuator device (7).

5. Automatic door (2) as claimed in one of claims 1 to 4,
**characterized in that**
the safety component (10) and the supply component (11) are designed to electrically charge the electrical energy store (12) of the safety component (10) wirelessly, preferably inductively, in the closed state of the door (2).

6. Automatic door (2) as claimed in one of claims 1 to 5,
**characterized in that**
the safety component (10) and the supply component (11) are designed to electrically charge the electrical energy store (12) of the safety component (10) of the door (2) by virtue of a contact element arranged on the door element (4, 4a, 4b) and electrically connected to the safety component (10) making contact with a mating contact element arranged on the door frame (5) and electrically connected to the supply component (11) in the closed state of the door (2).

7. Automatic door (2) as claimed in one of claims 1 to 6,
**characterized in that**
the safety component (10) and the control component (22) are designed to wirelessly interchange the data signals using a radio standard, in particular using a radio standard within the ISM band.

8. Automatic door (2) as claimed in one of claims 1 to 7,
**characterized in that**
the transport means is an omnibus (1), a rail vehicle, an aircraft, a cable car or an elevator car.

9. Automatic door (2) as claimed in one of claims 1 to 8,
**characterized in that**
the movable door element (4, 4a, 4b) is in the form of a door leaf.

10. Automatic door (2) as claimed in one of claims 1 to 9,
**characterized in that**
a) precisely one movable door element (4, 4a, 4b) is provided; or
b) precisely two movable door elements (4, 4a, 4b) are provided, wherein each of the door elements (4, 4a, 4b) has a corresponding safety component (10) which is supplied with electricity by the supply component (11) of the door frame (5).

11. Automatic door (2) as claimed in one of claims 1 to 10,
**characterized in that**
an actuator device (7) is arranged on the immovable door frame (5) in order to automatically open or close the at least one door element (4, 4a, 4b).

12. A transport means, in particular an omnibus (1) or a rail vehicle, having at least one door (2) as claimed in one of claims 1 to 11.

13. A method for operating an automatic door (2) for a transport means (1), with a door safety system (3), according to which a safety component (10) arranged on a movable door element (4, 4a, 4b) of the door (2) is supplied with electricity by a supply component (11) arranged on an immovable door frame (5) of the door (2), wherein the safety component (10) is autonomously supplied with electrical energy by its own electrical energy store (12) in the open state of the door (2), which electrical energy store is electrically charged by the supply component (11) only in the closed state of the door (2), and wherein a control component (22) that is arranged on the door frame (5) is used for the purpose of controlling and/or monitoring the safety component (10),
**characterized in that**
the control component (22) and the safety component (10) communicate with each other wirelessly and bidirectionally.

14. A computer program product having program code means for carrying out a method as claimed in claim 13 when the program is executed on a control device (23, 28) of a door safety system (3).

## Revendications

1. Porte automatique (2) pour un moyen de transport (1), avec un châssis de porte (5), au moins un élément de porte mobile (4, 4a, 4b) et un système de sécurité de porte (3) pour la porte (2), le système de sécurité de porte (3) comportant un composant de sécurité (10) disposé sur l'élément de porte mobile (4, 4a, 4b) de la porte (2), un composant d'alimentation (11) disposé sur le châssis de porte fixe (5) de la porte (2) pour l'alimentation électrique du composant de sécurité (10) et un composant de commande (22) disposé sur le châssis de porte (5) pour la commande et/ou la surveillance du composant de sécurité (10), le composant de sécurité (10) comportant un accumulateur d'énergie électrique (12) qui est conçu pour alimenter de façon autonome le composant de sécurité (10) en énergie électrique lorsque la porte (2) est ouverte, et le composant de sécurité (10) et le composant d'alimentation (11) étant conçus pour charger électriquement l'accumulateur d'énergie électrique (12) du composant de sécurité uniquement lorsque la porte (2) est fermée,
**caractérisée en ce que**
le composant de sécurité (10) et le composant d'alimentation (11) sont conçus pour échanger entre eux des signaux de données électriques sans fil et de façon bidirectionnelle.

2. Porte automatique (2) selon la revendication 1,
**caractérisée en ce que**
le composant de sécurité (10) est conçu pour la protection d'êtres vivants ou d'objets.

3. Porte automatique (2) selon la revendication 1 ou 2,
**caractérisée**
**en ce que** le composant de sécurité (10) comporte une barrière lumineuse (13) pour la détection d'êtres vivants ou d'objets dans la zone de fermeture de la porte (2), une réglette de contact de sécurité (14) pour la détection d'une collision de l'élément de porte (4, 4a, 4b) avec un être vivant ou un objet et/ou un émetteur de signaux visuels, sonores ou tactiles (15) pour l'avertissement d'êtres vivants.

4. Porte automatique (2) selon une des revendications 1 à 3,
**caractérisée**
**en ce que** le composant de sécurité (10) est conçu pour transmettre un signal d'interruption électrique (16) à un dispositif d'actionnement (7) utilisé pour le déplacement de l'élément de porte (4, 4a, 4b) ou pour déclencher une transmission d'un signal d'interruption (16) au dispositif d'actionnement (7) afin d'interrompre un processus de fermeture automatique de la porte (2) par le dispositif d'actionnement (7).

5. Porte automatique (2) selon une des revendications 1 à 4,
**caractérisée**
**en ce que** le composant de sécurité (10) et le composant d'alimentation (11) sont conçus pour charger électriquement sans fil, de préférence par induction, l'accumulateur d'énergie électrique (12) du composant de sécurité (10) lorsque la porte (2) est fermée.

6. Porte automatique (2) selon une des revendications 1 à 5,
**caractérisée**
**en ce que** le composant de sécurité (10) et le composant d'alimentation (11) sont conçus pour charger électriquement l'accumulateur d'énergie électrique (12) du composant de sécurité (10) de la porte (2) en mettant en contact, lorsque la porte (2) est fermée, un élément de contact disposé sur l'élément de porte (4, 4a, 4b) et relié électriquement avec le composant de sécurité (10) avec un élément de contact homologue disposé sur le châssis de porte (5) et relié électriquement avec le composant d'alimentation (11).

7. Porte automatique (2) selon une des revendications 1 à 6,
**caractérisée**
**en ce que** le composant de sécurité (10) et le composant de commande (22) sont conçus pour échanger les signaux de données sans fil en utilisant un standard radio, en particulier en utilisant un standard radio sur la bande ISM.

8. Porte automatique (2) selon une des revendications 1 à 7,
**caractérisée**
**en ce que** le moyen de transport est un omnibus (1), un véhicule ferroviaire, un aéronef, une cabine de téléphérique ou une cabine d'ascenseur.

9. Porte automatique (2) selon une des revendications 1 à 8,
**caractérisée**
**en ce que** l'élément de porte mobile (4, 4a, 4b) est configuré comme un battant de porte.

10. Porte automatique (2) selon une des revendications 1 à 9,
**caractérisée**
a) **en ce qu'**il est prévu exactement un élément de porte mobile (4, 4a, 4b) ou
b) qu'il est prévu exactement deux éléments de porte mobiles (4, 4a, 4b), chaque élément de porte mobile (4, 4a, 4b) comportant un composant de sécurité (10) correspondant qui est alimenté électriquement par le composant d'alimentation (11) du châssis de porte (5).

11. Porte automatique (2) selon une des revendications 1 à 10,
**caractérisée**
**en ce qu'**un dispositif d'actionnement (7) est disposé sur le châssis de porte fixe (5) pour ouvrir ou pour fermer automatiquement l'au moins un élément de porte (4, 4a, 4b).

12. Moyen de transport, en particulier omnibus (1) ou véhicule ferroviaire, avec au moins une porte (2) selon une des revendications 1 à 11.

13. Procédé de fonctionnement d'une porte automatique (2) pour un moyen de transport (1) avec un système de sécurité (3), selon lequel un composant de sécurité (10) disposé sur un élément de porte mobile (4, 4a, 4b) de la porte (2) est alimenté électriquement par un composant d'alimentation (11) disposé sur un châssis de porte fixe (5) de la porte (2), le composant de sécurité (10) étant alimenté en énergie électrique de façon autonome, lorsque la porte (2) est ouverte, par son propre accumulateur d'énergie électrique (12), lequel est chargé électriquement par le composant d'alimentation (11) uniquement lorsque la porte (2) est ouverte, et un composant de commande (22) disposé sur le châssis de porte (5) étant utilisé pour la commande et/ou la surveillance du composant de sécurité (10),
**caractérisé**
**en ce que** l'élément de commande (22) et l'élément de sécurité (10) communiquent entre eux sans fil et de façon bidirectionnelle.

14. Programme informatique avec des moyens de code de programme pour mettre en oeuvre le procédé selon la revendication 13 quand le programme est exécuté sur un dispositif de commande (23, 28) d'un système de sécurité de porte (3).
